(19) **Europäisches Patentamt / European Patent Office / Office européen des brevets**

(11) **EP 2 863 201 A1**

(12) **EUROPEAN PATENT APPLICATION**

(43) Date of publication:
**22.04.2015 Bulletin 2015/17**

(51) Int Cl.:
***G01M 11/02*** *(2006.01)*

(21) Application number: **14189401.4**

(22) Date of filing: **17.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.10.2013 US 201361893142 P**

(71) Applicant: **Point Grey Research Inc.**
**Richmond, British Columbia V6W 1k7 (CA)**

(72) Inventors:
• **Bull, Jeffrey David**
  **New Westminster, British Columbia V3M 0B2 (CA)**
• **Murray, Donald Ray**
  **Vancouver, British Columbia V5Z 2E3 (CA)**

(74) Representative: **Eisenführ Speiser**
**Patentanwälte Rechtsanwälte PartGmbB**
**Postfach 10 60 78**
**28060 Bremen (DE)**

(54) **Apparatus and methods for characterizing lenses**

(57) A test chart for characterizing lenses comprises X radial lines extending from a central point and Y concentric X-sided polygons centered at the central point. Each of the X radial lines intersects one vertex of each of the polygons. Each of the X radial lines is divided into Y segments by its intersection points with the central point and with the polygons. The radial lines and the polygons define boundaries of X*Y non-overlapping patches. At least two of the patches share a boundary and are distinctly colored from each other.

FIG. 15

EP 2 863 201 A1

**Description**

Cross-Reference to Related Application

This application claims the benefit under 35 U.S.C. §119 of United States Patent Application No. 61/893142 filed 18 October 2013 and entitled APPARATUS AND METHODS FOR CHARACTERIZING LENSES which is hereby incorporated herein by reference for all purposes.

Technical Field

This application relates to apparatus and methods for characterizing lenses.

Background

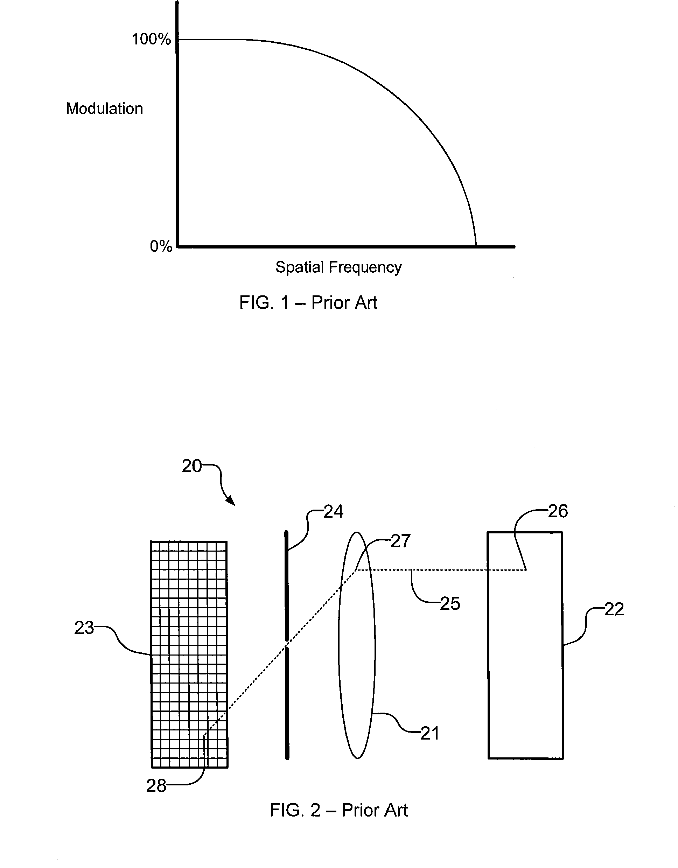

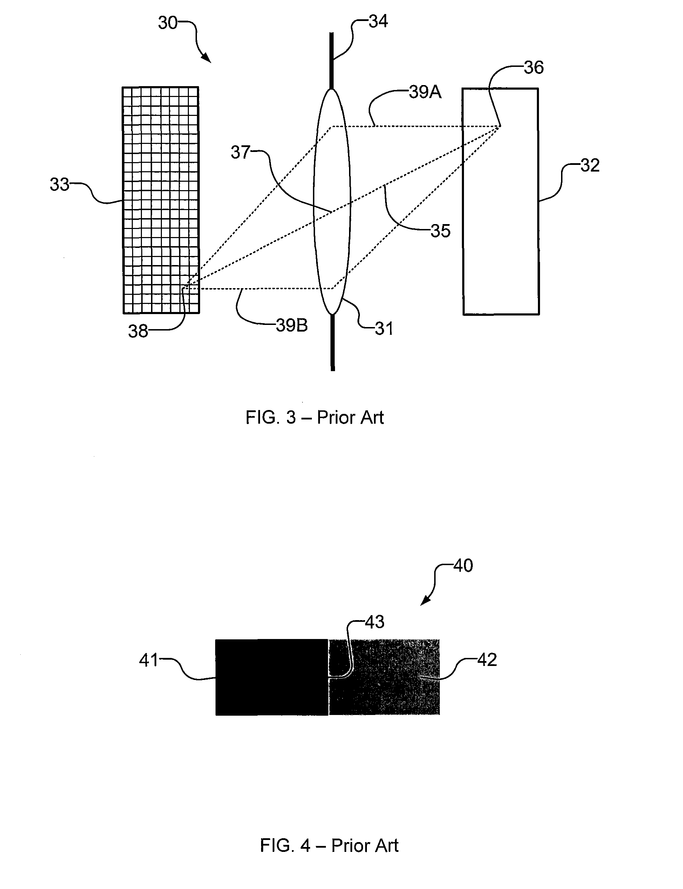

It is often desirable to determine the properties of a lens. An important property of a lens is its "sharpness". Sharpness can be defined in a variety of ways, but in general, it refers to the ability of a lens to form an image without excessive blurring.
A "test chart" is an object (typically a flat surface with a pattern printed thereon) which may be viewed through a lens. Features of images of test charts obtained using the lens may be measured in order to determine various properties of the lens. For example, an image can be analyzed mathematically to determine a modulation transfer function ("MTF") of the lens. The MTF of a lens refers to the ability of the lens to resolve various spatial frequencies.
An example of a MTF is shown in Figure 1. For low spatial frequencies, the modulation is 100%. As the spatial frequency increases, the modulation decreases to 0%.
An example setup of a lens measuring system 20 is shown, schematically, in Figure 2. A lens 21 is positioned between a test chart 22 and a focal plane array ("FPA") 23.
FPA 23 may comprise an image sensor, such as a charge-coupled device or a complementary metal-oxide-semiconductor (CMOS) imaging array. FPA 23 comprises a plurality of discrete regions, typically referred to as "pixels". Each pixel contains a light sensor. The pixels may be arranged in a regular grid. The regular grid of pixels may comprise rows of pixels in a horizontal direction and columns of pixels in a vertical direction. The horizontal and vertical directions may be orthogonal.
An aperture stop 24 is positioned between lens 21 and FPA 23. In some embodiments, aperture 24 is positioned between lens 21 and test chart 22. A ray of light 25 originates from a point 26 on test chart 22. Ray 25 passes through region 27 of lens 21, through the aperture of aperture stop 24, and strikes pixel 28 of FPA 23. In a similar way, each pixel of FPA 23 is associated with a unique region of lens 21 and a unique region of test chart 22.
Lens measuring systems of the general arrangement shown in Figure 2 are typically used for measuring properties of small-aperture object-space telecentric lenses.
Another example setup of a lens measuring system 30 is shown, schematically, in Figure 3. A lens 31 is positioned between a test chart 32 and a FPA 33. Lens 31 is supported by a mount 34. Mount 34 also acts as an aperture stop (with lens 31 completely filling the aperture).
A chief ray of light 35 originates from a point 36 on test chart 32. Chief ray 35 passes through the centre 37 of lens 31 and strikes pixel 38 of FPA 33. Other rays of light, for example rays 39A and 39B, also originate from point 36 and pass through lens 31 and strike pixel 38. The relative distances between test chart 32, lens 31, and FPA 33 are selected so that a focused image of test chart 32 is projected onto FPA 33.
In lens measuring system 30, test chart 32 is typically larger than lens 31. Also, the distance between test chart 32 and lens 31 is typically greater than the distance between FPA 33 and lens 31.
Many other types of lens measuring systems are also known in the art.
The entire image formed by a lens at its focal plane is called the "image circle". When testing a lens, it is desirable to test the entire image circle because it is not known in advance which portions (if any) of the lens will be unused in the lens' final application. For this reason, it is generally advantageous for the relative dimensions of the image circle and the FPA to be selected so that the image circle fits entirely within the FPA, thereby allowing all portions of the lens to be measured. Alternatively, the FPA may be moved relative to the lens during testing so that the entire image circle can measured piecewise. It is also generally advantageous for the image of the test chart to fill the entire image circle of the lens.
Figure 4 shows an example portion of a test chart 40. Test chart 40 has a black region 41 and a grey region 42. The boundary between black region 41 and grey region 42 defines an edge 43. Edge 43 is as close to "perfect" as possible (in this context "perfect" means that edge 43 consists of a straight line of zero width with one side being uniformly black and the other side being uniformly grey).
The image of test chart 40 through a lens can be obtained by an FPA in a lens measuring system (e.g. lens measuring system 20 or lens measuring system 30). The lens introduces aberrations that cause blurring of the image of edge 43. The extent of this blurring can be calculated based on measurements obtained by the FPA.

Assume that the image of a point of black region 41 far from edge 43 has a pixel value of 1 (where pixel value corresponds to the amount of light incident on the pixel), and that the image of a point of grey region 42 far from edge 43 has a pixel value of 100. If we consider a line of consecutively numbered pixels spaced apart along a line orthogonal to edge 43, the pixel values might be as follows:

| Pixel Number | 1 | 2 | 3 | 4 | 5 | 6 | 7 | 8 | 9 |
| --- | --- | --- | --- | --- | --- | --- | --- | --- | --- |
| Pixel Value | 1 | 1 | 10 | 20 | 50 | 80 | 90 | 100 | 100 |

If the lens being tested was perfectly sharp, all the pixel values would be either 1 or 100, with the possible exception of a single pixel that receives light rays from both sides of edge 43 (this is possible because each pixel has a finite size). However, since no lens is perfect, there will always be some degree of blurring.

The relationship between Pixel Number and Pixel Value describes the "edge step response" of a lens. The MTF of a lens can be estimated by conducting mathematical operations on the edge step response (including Fourier transformations).

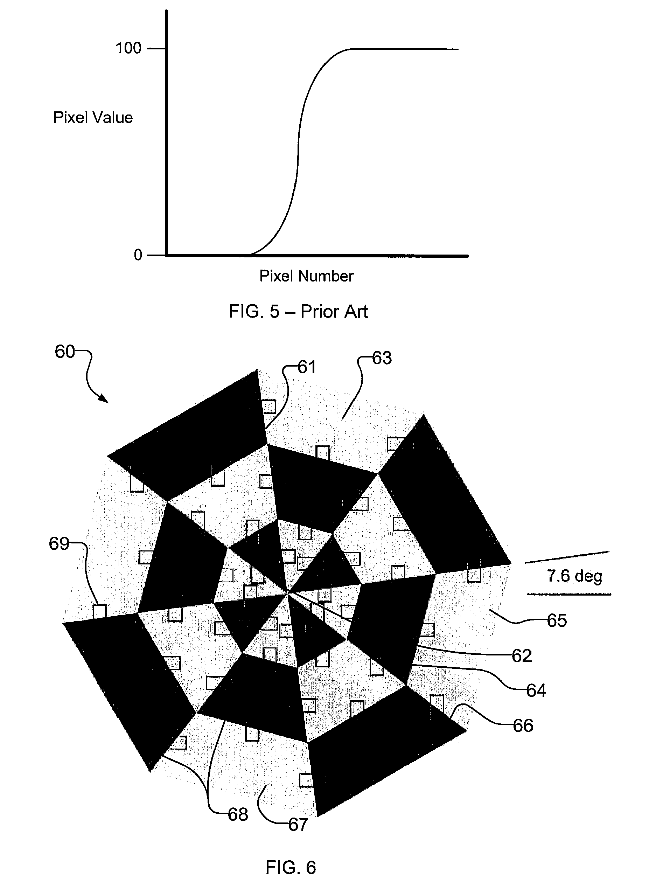

The number of data points in the edge step response depends on the pixel density of the FPA. Figure 5 shows an edge step response with a very high number of data points.

Summary

One aspect of the invention provides a test chart that may be used for lens testing. The test chart may be used with any suitable lens testing arrangement including arrangements of a type illustrated in Figures 2 and 3 The test chart comprises X radial lines extending from a central point and Y concentric X-sided polygons centered at the central point. Each of the X-sided polygons comprises X tangential lines. Each of the X radial lines intersects one vertex of each of the polygons. Each of the X radial lines is divided into Y segments by its intersection points with the central point and with the polygons. The radial lines and the polygons define boundaries of X*Y non-overlapping patches. At least two of the patches share a boundary and are distinctly colored from each other.

In some embodiments the X radial lines extend from the central point at equally spaced apart angular intervals and the Y concentric polygons are regular polygons.

In some embodiments, each of the patches is distinctly colored from every patch with which it shares a boundary.

In some embodiments X is even and the patches are colored to form a checkerboard pattern.

In some embodiments X is in the range of four to twenty. In some embodiments Y is in the range of two to ten. In some embodiments X is eight and Y is three.

In some embodiments every patch is either a first color or a second color, distinct from the first color.

In some embodiments the test chart is printed on a surface comprising a reference line.

In some embodiments the reference line comprises a line printed on the surface.

In some embodiments the reference line comprises an edge of the surface.

In some embodiments at least one of the radial or tangential lines has a slope relative to the reference line that has a threshold angular separation from slopes of 1/1, - 1/1, 1/0, and 0/1 (where x/y represents a slope with a rise of x and a run of y).

In some embodiments at least one of the radial or tangential lines has a slope relative to the reference line that has the threshold angular separation away from slopes of 2/1, -2/1, 1/2, -1/2, 3/1, -3/1, 1/3, -1/3, 3/2, -3/2, 2/3, and -2/3.

In some embodiments at least one the radial or tangential lines has a slope relative to the reference line that has the threshold angular separation away from slopes of M/N where M/N represents any slope that satisfies the following properties: both M and N are integers; the fraction M/N is irreducible; and both M and N are less than K and greater than -K; for some integer value of K between two and ten, inclusive.

In some embodiments the threshold angular separation is at least 1, 0.5, or 0.1 degrees.

Another aspect of the invention provides a test chart comprising a plurality of isosceles trapezoids. Each of the plurality of trapezoids comprises a pair of parallel edges and a pair of non-parallel edges. The non-parallel edges of each of the plurality of trapezoids define lines which aim at a common point. At least two of the trapezoids share an edge and are distinctly colored from each other.

In some embodiments, each of the plurality of trapezoids is distinctly colored from every trapezoid with which it shares an edge.

In some embodiments the plurality of trapezoids includes a subset of at least three congruent trapezoids and each trapezoid belonging to the subset shares two non-parallel edges with two other trapezoids belonging to the subset.

In some embodiments the test chart is printed on a surface comprising a reference line.

In some embodiments the reference line comprises a line printed on the surface.

In some embodiments the reference line comprises an edge of the surface.

In some embodiments at least one of the parallel or non-parallel edges has a slope relative to the reference line that has a threshold angular separation away from slopes of 1/1, -1/1, 1/0, and 0/1.

In some embodiments at least one of the parallel or non-parallel edges has a slope relative to the reference line that has the threshold angular separation away from slopes of 2/1, -2/1, 1/2, -1/2, 3/1, -3/1, 1/3, -1/3, 3/2, -3/2, 2/3, and -2/3.

In some embodiments at least one of the parallel or non-parallel edges has a slope relative to the reference line that has the threshold angular separation away from slopes of M/N where M/N represents any slope that satisfies the following properties: both M and N are integers; the fraction M/N is irreducible; and both M and N are less than K and greater than -K; for some integer value of K between two and ten, inclusive.

Another aspect of the invention provides a method for measuring a property of a lens. The method comprises providing a test chart. The test chart comprises X radial lines extending from a central point and Y concentric X-sided polygons centered at the central point. Each of the X-sided polygons comprises X tangential lines. Each of the X radial lines intersects one vertex of each of the polygons. Each of the X radial lines is divided into Y segments by its intersection points with the central point and with the polygons. The radial lines and the polygons define boundaries of X*Y non-overlapping patches. At least two of the patches share a boundary and are distinctly colored from each other. The method further comprises providing a lens and a focal plane array comprising a regular grid of pixels. The method further comprises obtaining an image of the test chart through the lens using the focal plane array. The slope of at least one of the radial and tangential lines, relative to either a horizontal or vertical direction of the regular grid of pixels, has a threshold angular separation away from slopes of 1/1, -1/1, 1/0, and 0/1.

In some embodiments the X radial lines extend from the central point at equally spaced apart angular intervals and the Y concentric polygons are regular polygons.

In some embodiments, each of the patches is distinctly colored from every patch with which it shares a boundary.

In some embodiments the slope of at least one of the radial and tangential lines, relative to either the horizontal or vertical direction of the regular grid of pixels, has the threshold angular separation away from slopes of 2/1, -2/1, 1/2, -1/2, 3/1, -3/1, 1/3, -1/3, 3/2, -3/2, 2/3, and -2/3.

In some embodiments the slope of at least one of the radial and tangential lines, relative to either the horizontal or vertical direction of the regular grid of pixels, has the threshold angular separation away from slopes of M/N where M/N represents any slope that satisfies the following properties: both M and N are integers; the fraction M/N is irreducible; and both M and N are less than K and greater than -K; for some integer value of K between two and ten, inclusive.

In some embodiments the method comprises identifying a region of interest on the test chart, the region of interest containing at least a portion of a radial or tangential line; determining the pixel values of the pixels which correspond to the region of interest; and calculating a K-times oversampled edge function of the portion of the line using the pixel values.

In some embodiments the method comprises calculating a modulation transfer function of a portion of a field of view of a lens corresponding to the region of interest using the oversampled edge function.

Another aspect of the invention provides a lens measuring system comprising a test chart. The test chart comprises X radial lines extending from a central point and Y concentric X-sided polygons centered at the central point. Each of the X-sided polygons comprises X tangential lines. Each of the X radial lines intersects one vertex of each of the polygons. Each of the X radial lines is divided into Y segments by its intersection points with the central point and with the polygons. The radial lines and the polygons define boundaries of X*Y non-overlapping patches. At least two of the patches share a common boundary and are distinctly colored from each other. The system further comprises a focal plane array comprising a regular grid of pixels; a data store containing data identifying a subset of the pixels; and a processor. The subset of pixels comprises pixels that are located to image a region of interest of the test chart. The region of interest of the test chart contains a portion of a radial or tangential line. The processor is configured to receive the pixel values of the subset of pixels and to calculate an oversampled edge function of the portion of the line based on the pixel values. The slope of the line relative to either a horizontal or vertical direction of the regular grid of pixels is S, and S has a threshold angular separation away from slopes of 1/1, -1/1, 1/0, and 0/1.

In some embodiments the X radial lines extend from the central point at equally spaced apart angular intervals and the Y concentric polygons are regular polygons.

In some embodiments, each of the patches is distinctly colored from every patch with which it shares a boundary.

In some embodiments S has the threshold angular separation away from slopes of 2/1, -2/1, 1/2, -1/2, 3/1, -3/1, 1/3, -1/3, 3/2, -3/2, 2/3, and -2/3.

In some embodiments S has the threshold angular separation away from slopes of M/N, where M/N represents any slope that satisfies the following properties: both M and N are integers; the fraction M/N is irreducible; and both M and N are less than K and greater than -K; for some integer value of K between two and ten, inclusive.

Another aspect of this invention provides a test chart. The test chart comprises a plurality of first areas of a first color and a plurality of second areas of a second color, distinct from the first color. The first and second areas are bounded by a plurality of radial first lines extending radially relative to a point and a plurality of polygonal second lines. Each of the polygonal second lines intersects each of the radial first lines. The test chart is printed on a surface comprising a reference line. The first and second areas are arranged such that at each location where a first area is bounded by one of the first lines and a second area lies on the other side of the first line, the first line has a slope relative to the reference line that has a threshold angular separation away from slopes of 1/1, -1/1, 1/0, and 0/1.

In some embodiments the first line has a slope relative to the reference line that has the threshold angular separation away from slopes of 2/1, -2/1, 1/2, -1/2, 3/1, -3/1, 1/3,-1/3, 3/2, -3/2, 2/3, and -2/3.

In some embodiments the first line has the threshold angular separation away from slopes of M/N, where M/N represents any slope that satisfies the following properties: both M and N are integers; the fraction M/N is irreducible; and both M and N are less than K and greater than -K; for some integer value of K between two and ten, inclusive.

In some embodiments the first and second areas are arranged such that at each location where a third area is bounded by one of the second lines and a fourth area lies on the other side of the second line, the second line has a slope relative to the reference line that has the threshold angular separation away from slopes of 1/1, -1/1, 1/0, and 0/1.

In some embodiments the first line has a slope relative to the reference line that has the threshold angular separation away from slopes of 2/1, -2/1, 1/2, -1/2, 3/1, -3/1, 1/3,-1/3, 3/2, -3/2, 2/3, and -2/3.

In some embodiments the second line has the threshold angular separation away from slopes of M/N, where M/N represents any slope that satisfies the following properties: both M and N are integers; the fraction M/N is irreducible; and both M and N are less than K and greater than -K; for some integer value of K between two and ten, inclusive.

Further aspects of the invention and features of example embodiments are illustrated in the accompanying drawings and/or described in the following description.

Brief Description of the Drawings

The accompanying drawings illustrate non-limiting example embodiments of the invention.

Figure 1 is graph of an example Modulation Transfer Function.

Figure 2 is a schematic diagram of an example setup of a lens measuring system.

Figure 3 is schematic diagram of another example setup of a lens measuring system.

Figure 4 shows an example portion of a test chart.

Figure 5 shows an edge step response with a very high number of data points.

Figure 6 shows a test chart according to an example embodiment of the invention.

Figure 7A shows a portion of a regular grid of pixels of an FPA.

Figure 7B shows example pixel values for pixels of Figure 7A.

Figure 7C shows a portion of a regular grid of pixels which has been horizontally subdivided into notional subpixels.

Figures 7D and 7E show schematically the process of offsetting rows of subpixels and summing columns of subpixels.

Figure 8 is a diagram of the edges of the innermost zone of an example test chart.

Figure 9 shows an example region of interest containing an edge.

Figures 10A-17 show various test charts according to alternative example embodiments of the invention.

Figure 18 is a flowchart illustrating a method for using a test chart according to an example embodiment of the invention.

Description

Throughout the following description specific details are set forth in order to provide a more thorough understanding to persons skilled in the art. However, well known elements may not have been shown or described in detail to avoid unnecessarily obscuring the disclosure. The following description of examples of the technology is not intended to be exhaustive or to limit the system to the precise forms of any example embodiment. Accordingly, the description and drawings are to be regarded in an illustrative, rather than a restrictive, sense.

One embodiment of the invention comprises a test chart with X (where X $\geq$3) radial lines originating from a common central point. In some embodiments, X is even to allow for the test chart to be filled to make a checkerboard pattern. The X radial lines delineate the test chart into X sectors. The test chart is also delineated into one or more zones delineated by one or more concentric polygons. Figure 6 shows an example of such a test chart with X = 8 and with three zones delineated by three concentric regular octagons.

Test chart 60 comprises eight radial lines 61 originating from a common central point 62. Lines 61 radiate at equally spaced angular intervals relative to central point 62. Radial lines 61 delineate test chart 60 into eight distinct sectors 63.

Test chart 60 also comprises a plurality of tangential lines 64. Tangential lines 64 form three concentric regular octagons 65 that delineate test chart 60 into three distinct zones 66. Each radial line 61 intersects one vertex of each of regular octagons 65.

Radial lines 61 and tangential lines 64 define twenty-four distinct trapezoidal patches 67. The trapezoidal patches 67 that are adjacent to central point 62 are actually triangles, but they may be thought of as trapezoids with one edge of zero length. Each patch 67 is an isosceles trapezoid.

Patches 67 are filled with alternating dark and light gray tones so that no adjacent patches 67 have the same tone. The boundaries between adjacent patches 67 define edges 68.

In some embodiments other colors are used instead of dark and light gray. ("Colors" for the purposes of this document, includes all colors, hues, tints, shades, tones, greys, etc.) In some embodiments more than two distinct colors are used. In some embodiments not all alternating patches have distinct colors. As long as at least two adjacent patches have distinct colors, there will be at least one edge which can be used to determine some properties of a lens, as described below.

The contrast of test chart 60 is preferably sufficiently low so as to avoid clipping the image at the black or white level during image capture. For example, if test chart 60 is to be used with an FPA with sensors with a range of $a$ to $b$, then the relation: $a$ < (normal exposure of dark grey patches) < (normal exposure of light grey patches) < $b$ is beneficial.

Test chart 60 may be created by any suitable process, for example, a printing process (e.g. inkjet printing, laser printing, lithography, etc.). The dot pitch of the printing process should be sufficiently fine so that the sharpness of the image of a lens is determined by the lens, not the printing process. Test chart 60 may be reflective or transmissive.

A lens measuring system (such as lens measuring system 20 or lens measuring system 30), may be used with test chart 60 to determine the properties of a lens. In some embodiments, the optical axis of the lens is perpendicular to test chart 60, and aligned with the central point 62 of test chart 60. In some embodiments, the FPA of the lens measuring system has a desired angular alignment with test chart 60 as discussed below.

Test chart 60 has a large number of edges 68 spaced throughout the chart. Test chart 60 maybe sufficiently large so that when it is used in an appropriate lens measuring system, test chart 60 fills the entire image circle of the lens. An image obtained by an FPA of the lens measuring system may be used to provide information about a large and well distributed number of portions of the lens.

A plurality of Regions of Interest ("ROI's") 69 are identified relative to test chart 60. ROI's 69 are not actually printed on test chart 60 and are shown for illustrative purposes only. Each ROI 69 corresponds to a region of pixels on an FPA imaging test chart 60. When the FPA captures an image of test chart 60 through a lens, each region of pixels corresponding to an ROI contains an image of a portion of the test chart corresponding to the ROI 69. ROI's are selected to include edges.

The image of an edge 68 within an ROI 69 may be analyzed to determine the MTF of a region of a lens corresponding to that ROI 69. A plurality of ROI's 69 may be used to calculate the MTF of many different parts of a lens. An MTF may be converted into other metrics of sharpness, such as MTF50.

The sharpness of an edge imaged by a lens will typically differ depending on whether the edge is radial or tangential relative to the lens. This difference may be caused by various types of lens aberrations such as astigmatism and lateral chromatic aberration. Test chart 60 provides both radial and tangential edges so that the MTF can be measured in both of these directions.

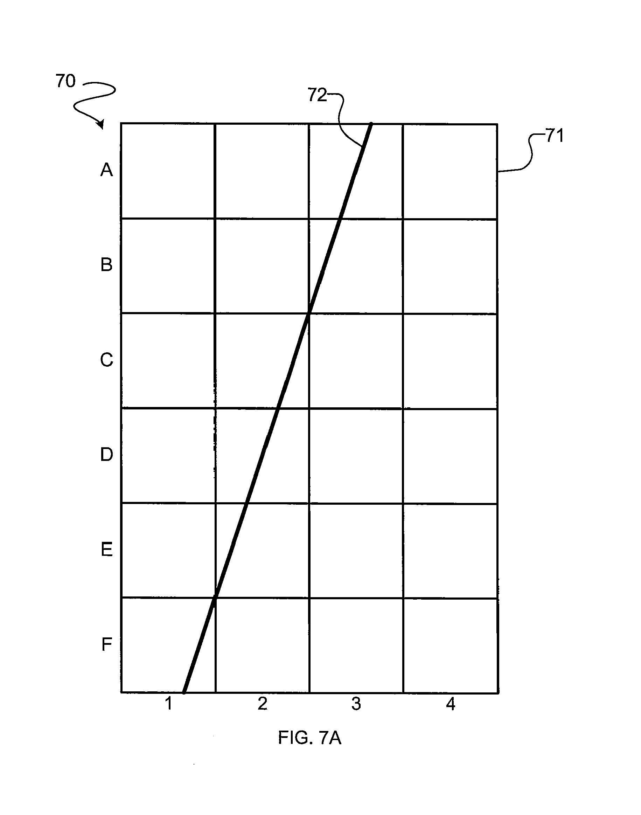

Figure 7A shows a portion of a regular grid of pixels 71 of a FPA 70. For convenience, the pixels of regular grid of pixels 71 are identified by horizontal numerical coordinates and vertical alphabetical coordinates.

An image of a test chart (not shown) produced by a lens (not shown) is incident on FPA 70. Line 72 represents the image of an edge on the test chart separating a region of a first color with a region of a second color, distinct from the first color. In this example line 72 has a slope of 3/1. Pixels far to the left of line 72 have relatively high pixel values (i.e. they receive a relatively high number of photons per exposure) corresponding to the relatively lighter region of the test chart. Pixels far to the right of line 72 have relatively low pixel values, corresponding to the relatively darker region of the test chart.

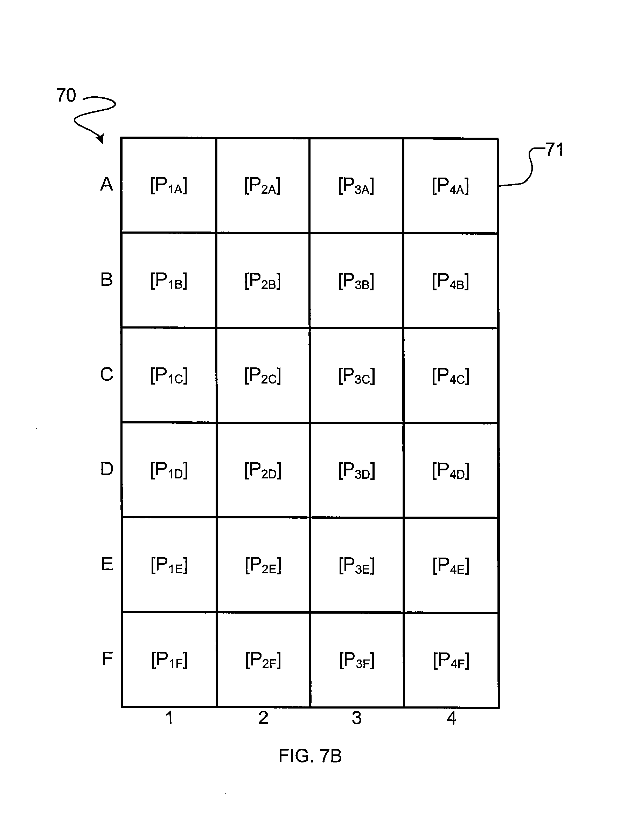

In Figure 7B the pixel value of a particular pixel is represented by $P_{XY}$ where X and Y are the horizontal and vertical coordinates, respectively, of the pixel (e.g. the pixel value of pixel 1 A is represented by $P_{1A}$). Figure 7B shows each of the pixel values of regular grid of pixels 71 (line 72 is not shown in Figure 7B).

An MTF can be calculated based on the pixel values from a single row (or column) of pixels which crosses line 72. For example, an MTF can be calculated based on the pixel values in row A of Figure 7B.

A technique called "oversampling" can be used to generate an "oversampled edge function" that can be used to obtain a more accurate measurement of an MTF. An example oversampling calculation is described below. In this example, an oversampling factor of four will be applied in the horizontal direction. Other oversampling factors may be used in other embodiments.

The oversampled edge function is obtained by combining the pixel values from a plurality of rows (or the pixel values from a plurality of columns), in this example all of rows A-F will be combined. An oversampled edge function has a higher resolution, than any individual row of pixels, and thus it can be used to calculate a relatively more accurate MTF.

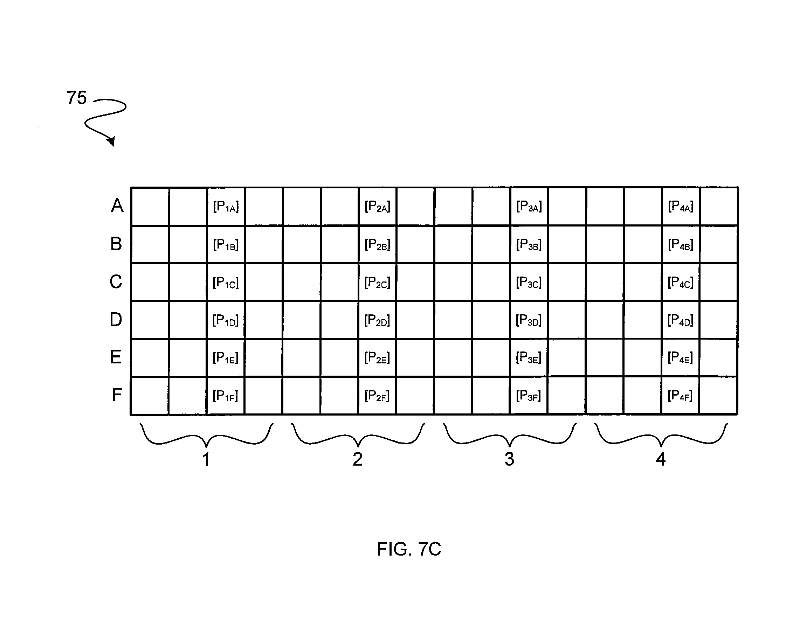

Each pixel is horizontally subdivided into four notional subpixels to create a subpixel grid 75, as illustrated in Figure 7C. The pixel value of each pixel is assigned to one of its subpixels. In this example, the third subpixel is used. The choice of subpixel is arbitrary.

To generate the oversampled edge function, each of rows B-F of subpixel grid 75 is horizontally offset from row A. The purpose of these offsets is to vertically align the portion of each row which is intersected by line 72. The appropriate offset for a particular row θ may be calculated using the following formula:

$$H = \{V * K / S\}$$

where:

- H is the horizontal offset between row A and row θ (measured in units of horizontal subpixels);
- V is the vertical distance between row A and row θ (measured in units of vertical pixels);
- K is the oversample factor (measured in units of horizontal subpixels per horizontal pixel);
- S is the slope of line 72 (measured in units of vertical pixels per horizontal pixel); and
- {} means "rounded to the nearest subpixel".

Applying this formula for row B we obtain:

$$\text{horizontal offset between row A and row B} = \{1*4/3\} = \{4/3\} = 1$$

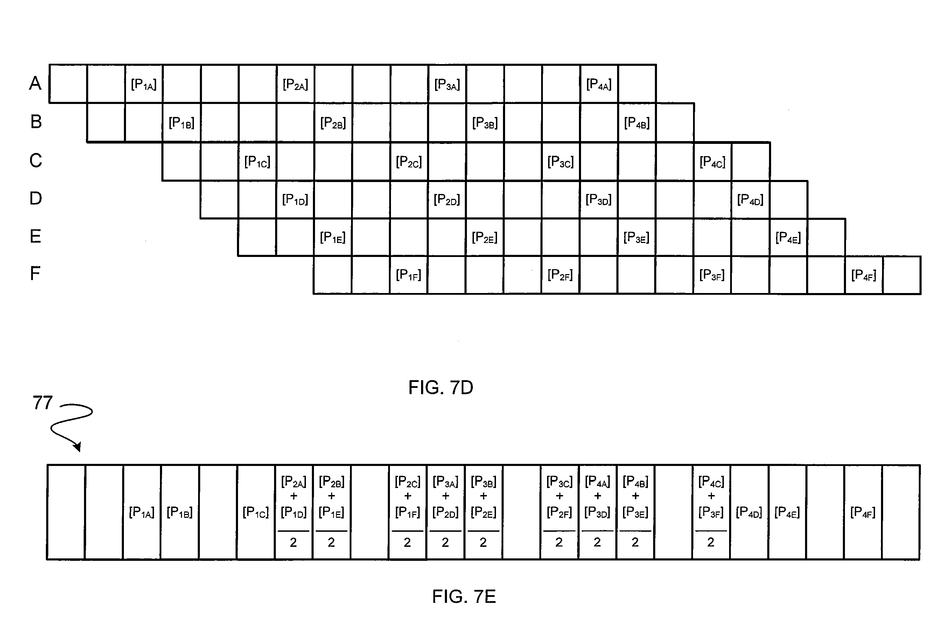

Thus, we shift row B by one subpixel to the right. Performing similar calculations for rows C-F yields Figure 7D. Rows C-F are shifted 3, 4, 5, and 7 subpixels to the right, respectively. Note that it is not necessary to physically shift each row. The rows may be shifted notionally.

Next, the pixel values of each column of subpixels in Figure 7D are summed. Then, each sum is divided by the number of contributing subpixels to obtain an oversampled edge function 77 as shown in Figure 7E.

Oversampled edge function 77 contains several subpixels with no pixel values. Such subpixels are known as "empty bins". Pixel values may be assigned to these empty bins to facilitate performing an MTF calculation. It is possible to use interpolated values for the empty bins, but this causes a loss of accuracy of the MTF. It is desirable to use an oversampled edge function which has a relatively low number of empty bins (or even no empty bins).

A few subpixels (including empty bins) on either end of the oversampled edge function may be ignored in the MTF calculation. In some embodiments, the number of pixels ignored on each end is equal to half of the maximum horizontal offset between adjacent rows. Since the subpixels on either end of the oversampled edge function are relatively far from edge 72, ignoring them does not significantly affect the accuracy of the MTF.

For any oversampling factor, an edge with a slope of 1/1, -1/1, 1/0, or 0/1 will produce a relatively large number of empty bins.

For an oversampling factor of four, edges with a slope of 2/1, 1/2, 3/1, 1/3, 3/2, or 2/3, and the negatives of these slopes (approximately 63.43, 26.57, 71.57, 18.43, 56.31, and 33.69 degrees, and the negatives of these angles, respectively) will produce relatively large numbers of empty bins.

For an oversampling factor of K (for values of K up to at least 10), slopes of M/N, where M and N are both integers, the fraction M/N is irreducible, and both M and N are less than K and greater than -K, will produce relatively large numbers of empty bins.

By selecting an appropriate value for the slope of an edge, the incidence of empty bins in the edge's oversample edge function can reduced or even eliminated. A test chart may be rotated so that its edges have slopes that provide relatively few empty bins for the oversampling factor to be applied.

Test chart 60, as shown in Figure 6, can be described as being rotated by 7.6 degrees anticlockwise away from "straight", where "straight" means one of radial edges 61 is at zero degrees relative to a reference alignment to an FPA. A reference line may be used to achieve the desired alignment. The reference line (not shown) may be an edge of a page on which test chart 60 is printed, or it may be a line printed on the page. When test chart 60 is used with a lens measuring system, the reference line and the regular grid of pixels of the FPA should be parallel.

Radial edges 61 of test chart 60 have angles of 7.6 degrees plus or minus all integer multiples of 45 degrees (e.g. 7.6, 52.6, 97.6, 142.6, 187.6, 232.6, 277.6, and 322.6 degrees). Tangential edges 64 of test chart 60 have angles of 75.1 degrees, plus or minus all integer multiples of 45 degrees (e.g. 30.1, 75.1, 120.1, 165.1, 210.1, 255.1, 300.1, and 345.1 degrees).

The rotation of test chart 60 by 7.6 degrees relative to the FPA creates angular separation between radial edges 61 and the "bad angles" associated with four times oversampling identified above. Thus when four times oversampled edge functions are calculated for radial edges 61 of test chart 60, there will be relatively few empty bins, and the MTF's calculated using test chart 60 can be relatively accurate.

In general, a test chart can be created by determining several "bad angles" for the oversampling factor that will be applied, and then rotating the test chart such that the radial and tangential edges are separated from the "bad angles". In some embodiments, an optimization calculation may be performed to determine a rotation that will maximize the angular separation of the radial and tangential edges from the identified "bad angles".

Alternatively, the angles of the radial and tangential edges of a given test chart can be readily calculated as a function of the angle of rotation of the test chart, and the number of empty bins for each edge can be readily calculated as a function of the edge angle for a given oversampling factor. Using these functions, the angle of rotation can be varied to determine an angle which results in a relatively low number of empty bins.

If a test chart has a design similar to test chart 60, but has N radial lines forming N equal sectors and is rotated by X degrees anticlockwise from "straight", then:

- the radial lines will be at X+I(360/N) degrees, where I can be integer; and
- the tangential lines will be at X+90-(180/N)+I(360/N) degrees where I can be any integer.

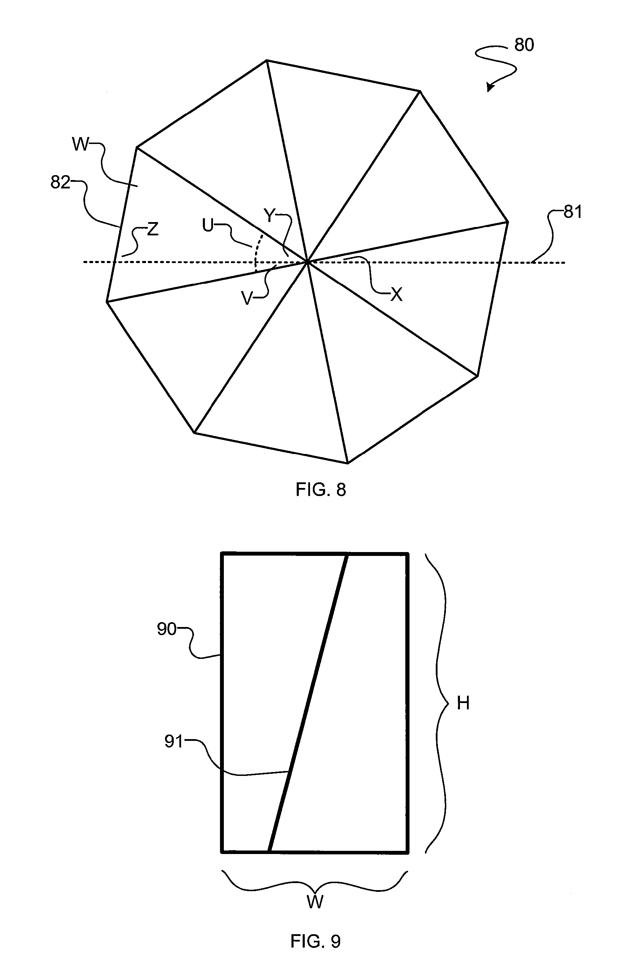

The validity of the second formula can be illustrated by reference to Figure 8, which is a diagram of the edges of the innermost zone of a test chart 80. For the sake of clarity, the shading of test chart 80 is not shown. Test chart 80 has been rotated from "straight" by X degrees anticlockwise.

Test chart 80 has eight radial lines forming eight equal sectors, but for the purposes of the discussion below, we will refer to test chart 80 as having N radial lines and N sectors. Test chart 80 has angles U, V, W, X, Y, and Z. We are interested in Z, the angle formed between horizontal line 81 and tangential line 82.

By algebra and geometry we obtain Z = X+90-(180/N). Thus the angle between horizontal line 81 and tangential line 82 is X+90-(180/N) degrees.

Since there are a total of N tangential lines that form a closed loop, the general formula for the angles of the tangential lines is X+90-(180/N)+I(360/N) where I can be any integer.

There are several different ways to compute an MTF (see, for example, "Modulation Transfer Function in Optical and Electro-optical Systems", G. D. Boreman, 2001, SPIE Press). Depending on the nature of a test chart, different types of MTF calculations may be more or less advantageous. For example, for a slanted edge, it is advantageous to use a slanted edge MTF calculation that includes a correction for the change in effective sampling frequency due to the slanted edge.

Where oversampling is used, it is advantageous to use an MTF calculation that takes into account the possibility of empty bins.

It may be advantageous to use a monochrome sensor as an FPA so that the MTF is not degraded by a color filter array pattern such as a Bayer filter.

It may be advantageous for the MTF calculation to include a correction to account for the fact that each pixel of an FPA has a finite area. The MTF of a square pixel is:

$$MTF_{pixel} = \frac{\sin \pi fw}{\pi fw}$$

where f is spatial frequency and w is the width of the pixel. The MTF of a region of a lens associated with a pixel can be approximated as:

$$MTF_{lens} = \frac{MTF_{measured}}{MTF_{pixel}}$$

Once an MTF is calculated, other metrics (e.g. MTF50) can be determined based on the MTF.

An oversampled edge function may be calculated based on the pixel values of the pixels corresponding to an ROI containing the edge. The oversampled edge function can be used to calculate an MTF for a region of a lens corresponding to the ROI. Computer hardware and software may be used to perform these calculations.

Various considerations dictate the optimal size and shape of the ROI's. Ideally, each ROI should be dimensioned such that the edge it contains traverses at least one whole pixel in both the horizontal and vertical directions of the alignment of the regular grid of pixels of the FPA.

An appropriate ROI size may be determined empirically by repeating an MTF measurement while gradually increasing the ROI size until the MTF becomes insensitive to further increases in the ROI size.

In some embodiments, the ROI's may range between 50 and 200 pixels in length. In embodiments where a relatively higher resolution FPA is used, the absolute size of the ROI's (measured in mm or inches) may be relatively lower. Smaller ROI's may accommodate greater numbers of zones and sectors, and thus permit MTF measurements of a greater number of regions of a particular lens.

In some embodiments, the ROI's are rectangular in shape. In some embodiments, the rectangular ROI's are aligned so that their edges are parallel with the regular grid of pixels of an FPA.

In test chart 60, the ROI's 69 are rectangular in shape. ROI's 69 have an aspect ratio of 2:1. The long edge of each ROI 69 is oriented to maximize the distance from the corners of the ROI to the edge running through the ROI. If this distance is too small, errors may be introduced into the MTF calculation.

In some embodiments the ROI's are non-rectangular in shape. In some embodiments differently shaped and/or dimensioned ROI's are used at different locations of a test chart. In some embodiments the shape and/or dimension of each ROI depends on the slope of the edge it contains.

In some embodiments, every edge of a test chart contains at least one ROI. In some embodiments, every trapezoid of a test chart contains an ROI on each of its four edges.

In some embodiments, information identifying the sets of pixels which correspond to each ROI for a particular test chart / lens combination are saved in a data store. In some embodiments, these sets of pixels may be modified depending on a selected angle of rotation of a test chart.

Figure 9 shows an example rectangular ROI 90 containing an edge 91 of a test chart. Opposite sides of edge 91 have distinct colors. ROI 90 has a height H and a width W.

If height H is relatively large, then there will be a relatively large number of rows of pixels available to use to generate an oversampled edge function. In general, when more lines of pixels are used (e.g. rows or columns of pixels), the resulting oversampled edge function (and the corresponding MTF) will be more accurate.

If width W is not large enough to ensure that the pixel values of the pixels at the ends of each row achieve the values that fully correspond, respectively, to the distinct colors on either side of line 91, then the calculated MTF associated with ROI 90 maybe inaccurate. Also, if width W is too narrow, other sources of inaccuracy may be introduced into the MTF calculation (e.g. a "window function" used in the MTF calculation may result in reduced accuracy).

Some embodiments of the invention comprise test charts with greater or fewer numbers of sectors and/or zones compared to test chart 60. Test charts with more sectors and/or zones have more edges that may be used to make MTF measurements of more regions of a lens.

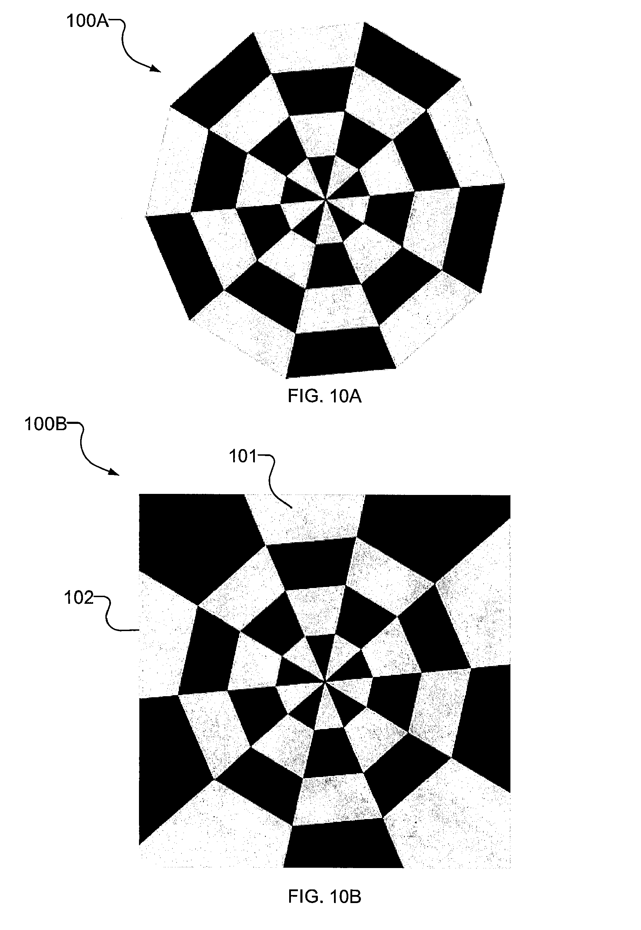

Figure 10A shows a test chart 100A with four zones and ten sectors. The number of sectors affects the angles of both the radial and tangential edges, and therefore the number of sectors affects the rotation of test chart 90 required in order to have the radial and tangential edges separated from any "bad angles". Test chart 100A has been rotated so that one of its radial edges is at a 5.4 degree angle relative to the horizontal edge of the page.

Figure 10B shows a test chart 100B, which is an alternative embodiment of test chart 100A. The outermost zone 101 of test chart 100B has been extended to fill a square boundary 102. Test chart 100B may be dimensioned to completely fill a square sheet of paper.

In some embodiments a test chart may be adapted for use with lenses that are expected to yield images distorted in known ways by changing the relative sizes of the sectors and/or zones. The sizes of the sectors and/or zones may be changed in order to achieve an even distribution of ROI's on the image projected onto the FPA. The sizes of the sectors and/or zones may also be changed in order to ensure that ROI's can fit on all of the edges.

In some embodiments a test chart may be adapted for use with lenses that are expected to yield images distorted in known ways by changing the shape of the boundaries between sectors and/or zones. For example the edges of test chart 60 may be curved so that when they are imaged by a particular "distorted" lens, the boundaries appear straight in the image.

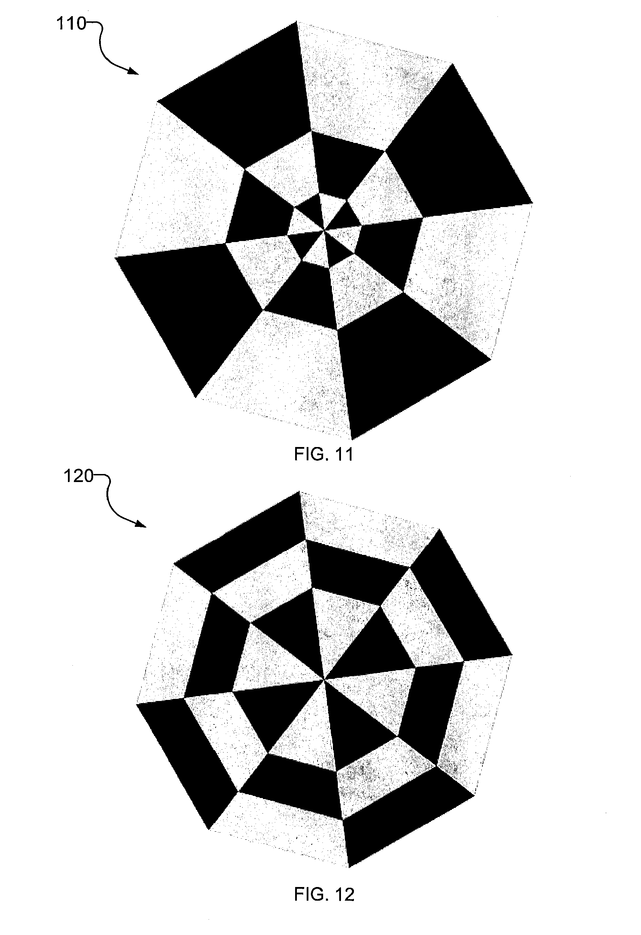

Figure 11 shows a test chart 110 which has been pre-distorted for use with a lens with barrel distortion. The zones decrease in radial thickness toward the centre of the chart. (A test chart could also be distorted for use with a lens with pincushion distortion by having the zones increase in radial thickness toward the centre of the chart.) The circular symmetry of the chart ensures that the basic structure of the chart is not changed by radial distortion and so suitable computer based target registration methods can readily function with the distortion.

To measure an MTF of a distorted lens, it is not always necessary to use a distorted test chart.

If test chart 110 is used with a lens with radial distortion (e.g. barrel distortion or pin-cushion distortion), the tangential edges of test chart 110 will appear curved in the resulting image. To correct for this, the tangential edges can be curved in an opposite direction on the chart so that they appear straight in the image produced by the lens. Alternatively, a slanted edge MTF calculation can incorporate a correction for curved edges.

In an example "curved edge correction", the location of the edge along each row (or column) of pixels in an ROI is estimated by finding the centroid of the derivative of the row of pixel values. A line or polynomial is then fit to the estimated edge locations. In some embodiments a least-squares method is used to determine the line or polynomial. In some embodiments the polynomial is a $2^{nd}$ order polynomial. The calculated line or polynomial is then used to determine the horizontal offsets of each row for the purpose of calculating the oversampled edge function, as described above.

In some embodiments the sizes of the zones are adjusted in order to provide the possibility of more ROI's close to the perimeter of the chart. Figure 12 shows a test chart 120 with a relatively larger central zone.

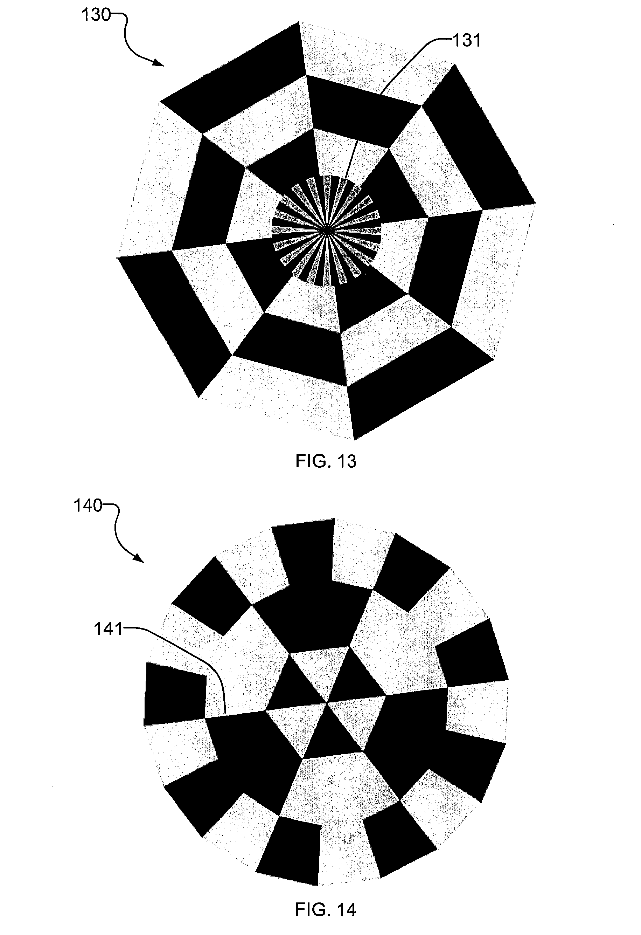

In some embodiments, ROI's of the desired size cannot fit into the central zone. In such embodiments the central zone may be excluded from the MTF calculation, and it may be replaced by other patterns. Figure 13 shows a test chart 130 in which the central zone is replaced with a Siemens™ star 131 as an aid for focusing. In other embodiments, other patterns could be placed in the center of a lens test chart, such as a feature to aid with automated image processing for recognizing the center of the chart.

Figure 14 shows a test chart 140 with three zones and eighteen sectors. The sectors of the innermost two zones have been shaded such that there are only six radial edges 141 within each of these zones. Also, the tangential edges at the boundary of the two innermost zones have been modified so that there are only six such tangential edges.

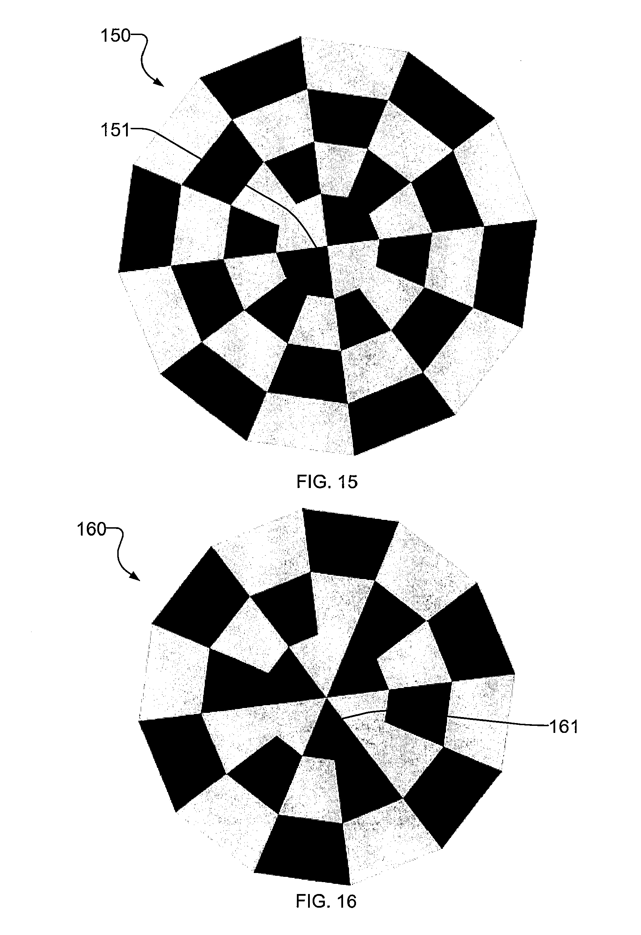

Figure 15 shows a test chart 150 with four zones and twelve sectors. The sectors of the innermost zone have been shaded such that there are only four radial edges 151 within the zone.

Figure 16 shows a test chart 160 with three zones and twelve sectors. The sectors of the innermost zone have been shaded such that there are only six radial edges 161 within the zone.

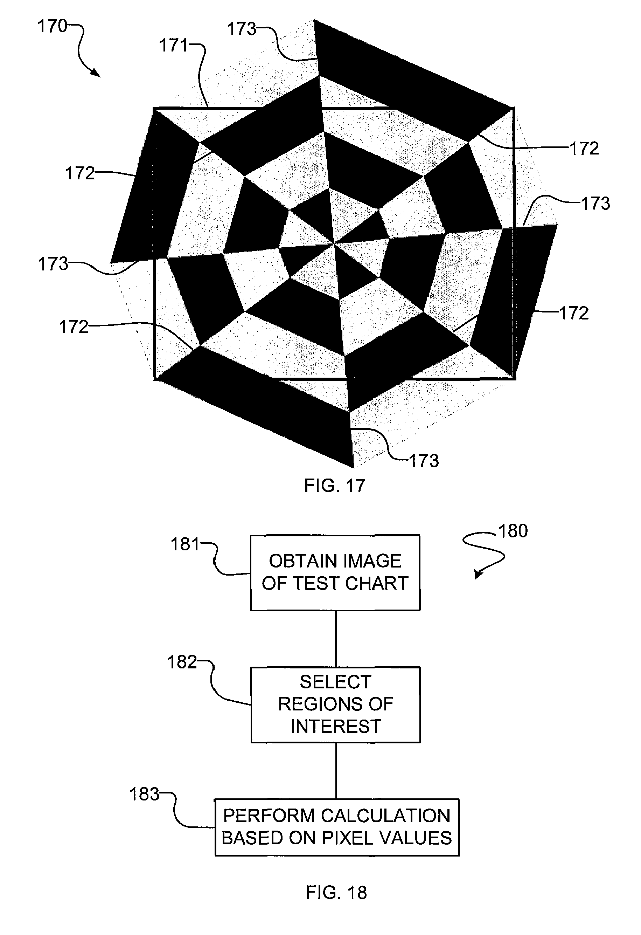

In some embodiments, not all sectors are equal in size. Figure 17 shows a test chart 170 with four zones and eight sectors. Box 171 is not part of test chart 170, but is included to illustrate the portion of test chart 170 which is imaged by an FPA with a 4:3 aspect ratio. Four diagonal radial edges 172 run along the diagonals of box 171 (at 36.87, 143.13, 216.87, and 323.13 degrees). Diagonal radial edges 172 have an angular separation of at least 3.18 degrees from the "bad angles" for an oversampling factor of four. Thus when an oversampling factor of four is applied to ROI's on diagonal radial edges 172 there are relatively few empty bins.

Four other radial edges 173 of test chart 170 are rotated 5 degrees anticlockwise from vertical and horizontal (relative to box 171). This rotation avoids the generation of an excessively high number of empty bins when an oversampling factor of four is applied. In an alternative embodiment of test chart 170, radial edges 173 are rotated by 6.5 degrees anticlockwise from vertical and horizontal (relative to box 171). In this embodiment radial edges 173 have an angular separation of at least 3.21 degrees from the "bad angles" for an oversampling factor of four.

Figure 18 is a flowchart illustrating a method 180 for determining characteristics (e.g. measuring the sharpness) of a lens according to an embodiment of the invention. In block 181, an image of a test chart is obtained using a FPA. In some embodiments, the lens is focused on the chart prior to obtaining the image. In some embodiments, method 180 is carried out multiple times and the focus is adjusted each time to increase the measured sharpness.

The test chart is a chart as described above. The test chart may be rotated relative to a regular grid of pixels of the FPA as describe above. The image may be obtained for example by using a lens measuring system like lens measuring system 20 or lens measuring system 30 described above. The image of the test chart comprises a plurality of pixel values, each corresponding to one of a plurality of pixels of the FPA.

In block 182, one or more regions of interest are selected. Each region of interest corresponds to some subset of pixels. Each region of interest contains pixels which represent an image of an edge of the test chart. Block 182 may comprise retreving information identifying the regions of interest associated with the thest chart from a computer readable memory.

In block 183, for each region of interest, a calculation is performed, using the pixel values as inputs, to determine a characteristic (e.g. the MTF) of a portion of the lens corresponding to the region of interest.

In some embodiments, some or all of the steps of method 180 are carried out by a computer.

The following are non-limiting enumerated example embodiments:

1. A test chart comprising:

   X radial lines extending from a central point; and
   Y concentric X-sided polygons centered at the central point;

wherein:

   each of the X-sided polygons comprises X tangential lines;
   each of the X radial lines intersects one vertex of each of the polygons;
   each of the X radial lines is divided into Y segments by its intersection points with the central point and with the polygons;
   the radial lines and the polygons define boundaries of X*Y non-overlapping patches; and
   at least two patches share a boundary and are distinctly colored from each other.

2. A test chart according to aspect 1 wherein the X radial lines extend from the central point at equally spaced apart angular intervals and the Y concentric polygons are regular polygons.

3. A test chart according to any one of aspects 1 and 2 wherein each of the patches is distinctly colored from every patch with which it shares a boundary.

4. A test chart according to aspect 3 wherein X is even and patches are colored to form a checkerboard pattern.

5. A test chart according to any one of aspects 1 to 4 wherein X is between four and twenty, inclusive, and Y is between two and ten, inclusive.

6. A test chart according to aspect 5 wherein X is eight and Y is three.

7. A test chart according to any one of aspects 1 to 6 wherein every patch is either a first color or a second color, distinct from the first color.

8. A test chart according to any one of aspects 1 to 7 wherein the test chart is printed on a surface comprising a reference line.

9. A test chart according to aspect 8 wherein the reference line comprises a line printed on the surface.

10. A test chart according to aspect 8 wherein the reference line comprises an edge of the surface.

11. A test chart according to any one of aspects 8 to 10 wherein at least one of the radial or tangential lines has a slope relative to the reference line that has a threshold angular separation away from slopes of 1/1, -1/1, 1/0, and 0/1.

12. A test chart according to aspect 11 wherein at least one of the radial or tangential lines has a slope relative to the reference line that has the threshold angular separation away from slopes of 2/1, -2/1, 1/2, -1/2, 3/1, -3/1, 1/3, -1/3, 3/2, -3/2, 2/3, and -2/3.

13. A test chart according to aspect 11 wherein at least one of the radial or tangential lines has a slope relative to the reference line that has the threshold angular separation away from slopes of M/N where M/N represents any slope that satisfies the following properties:

   both M and N are integers;
   the fraction M/N is irreducible; and
   both M and N are less than K and greater than -K;

for some integer value of K between two and ten, inclusive.

14. A test chart according to any one of aspects 11 to 13 wherein the threshold angular separation is at least 1 degree.

15. A test chart according to any one of aspects 11 to 13 wherein the threshold angular separation is at least 0.5 degrees.

16. A test chart according to any one of aspects 11 to 13 wherein the threshold angular separation is at least 0.1 degrees.

17. A test chart comprising a plurality of isosceles trapezoids, wherein:

each of the plurality of trapezoids comprises a pair of parallel edges and a pair of non-parallel edges;
the non-parallel edges of each of the plurality of trapezoids define lines which aim at a common point; and
at least two trapezoids share an edge and are distinctly colored from each other.

18. A test chart according to aspect 17 wherein each trapezoid of the plurality of trapezoids is distinctly colored from every trapezoid with which it shares an edge.

19. A test chart according to any one of aspects 17 and 18 wherein:

the plurality of trapezoids includes a subset of at least three congruent trapezoids; and
each trapezoid belonging to the subset shares two non-parallel edges with two other trapezoids belonging to the subset.

20. A test chart according to any one of aspects 17 to 19 wherein the test chart is printed on a surface comprising a reference line.

21. A test chart according to aspect 20 wherein the reference line comprises a line printed on the surface.

22. A test chart according to aspect 20 wherein the reference line comprises an edge of the surface.

23. A test chart according to any one of aspects 20 to 22 wherein at least one of the parallel or non-parallel edges has a slope relative to the reference line that has a threshold angular separation away from slopes of 1/1, -1/1, 1/0, and 0/1.

24. A test chart according to aspect 23 wherein at least one of the parallel or non-parallel edges has a slope relative to the reference line that has the threshold angular separation away from slopes of 2/1, -2/1, 1/2, -1/2, 3/1, -3/1, 1/3, -1/3, 3/2, -3/2, 2/3, and -2/3.

25. A test chart according to aspect 23 wherein at least one of the parallel or non-parallel edges has a slope relative to the reference line that has the threshold angular separation away from slopes of M/N where M/N represents any slope that satisfies the following properties:

both M and N are integers;
the fraction M/N is irreducible; and
both M and N are less than K and greater than -K;
for some integer value of K between two and ten, inclusive.

26. A test chart according to any one of aspects 23 to 25 wherein the threshold angular separation is at least 1 degree.

27. A test chart according to any one of aspects 23 to 25 wherein the threshold angular separation is at least 0.5 degrees.

28. A test chart according to any one of aspects 23 to 25 wherein the threshold angular separation is at least 0.1 degrees.

29. A method for measuring a property of a lens, the method comprising:

providing a test chart comprising:

X radial lines extending from a central point; and
Y concentric X-sided polygons centered at the central point;

wherein:

each of the X-sided polygons comprises X tangential lines;
each of the X radial lines intersects one vertex of each of the polygons;
each of the X radial lines is divided into Y segments by its intersection points with the central point and with the polygons;
the radial lines and the polygons define boundaries of X*Y non-overlapping patches; and
at least two patches share a boundary and are distinctly colored from each other;

providing a lens;
providing a focal plane array comprising a regular grid of pixels; and
obtaining an image of the test chart through the lens using the focal plane array;
wherein the slope of at least one of the radial and tangential lines, relative to either a horizontal or vertical direction of the regular grid of pixels, has a threshold angular separation away from slopes of 1/1, -1/1, 1/0, and 0/1.

30. A method according to aspect 29 wherein the X radial lines extend from the central point at equally spaced apart angular intervals and the Y concentric polygons are regular polygons.

31. A method according to any one of aspects 29 and 30 wherein each of the patches is distinctly colored from every patch with which it shares a boundary.

32. A method according to any one of aspects 29 to 31 wherein the slope of at least one of the radial and tangential lines, relative to either the horizontal or vertical direction of the regular grid of pixels, has the threshold angular separation away from slopes of 2/1, -2/1, 1/2, -1/2, 3/1, -3/1, 1/3, -1/3, 3/2, -3/2, 2/3, and -2/3.

33. A method according to any one of aspects 29 to 31 wherein the slope of at least one of the radial and tangential lines, relative to either the horizontal or vertical direction of the regular grid of pixels, has the threshold angular separation away from slopes of M/N where M/N represents any slope that satisfies the following properties:

both M and N are integers;
the fraction M/N is irreducible; and
both M and N are less than K and greater than -K;
for some integer value of K between two and ten, inclusive.

34. A method according to aspect 33 comprising:

identifying a region of interest on the test chart, the region of interest containing at least a portion of a radial or a tangential line;
determining the pixel values of the pixels which correspond to the region of interest; and
calculating a K-times oversampled edge function of the portion of the line using the pixel values.

35. A method according to aspect 34 comprising calculating a modulation transfer function of a portion of a field of view of a lens corresponding to the region of interest using the oversampled edge function.

36. A method according to any one of aspects 29 to 35 wherein the threshold angular separation is at least 1 degree.

37. A method according to any one of aspects 29 to 35 wherein the threshold angular separation is at least 0.5 degrees.

38. A method according to any one of aspects 29 to 35 wherein the threshold angular separation is at least 0.1 degrees.

39. A lens measuring system comprising:

a test chart comprising :

X radial lines extending from a central point; and
Y concentric X-sided polygons centered at the central point;

wherein:

each of the X-sided polygons comprises X tangential lines;
each of the X radial lines intersects one vertex of each of the polygons;
each of the X radial lines is divided into Y segments by its intersection points with the central point and with the polygons;
the radial lines and the polygons define boundaries of X*Y non-overlapping patches; and
at least two of the patches share a boundary and are distinctly colored from each other;

a focal plane array comprising a regular grid of pixels;
a data store containing data identifying a subset of the pixels; and
a processor;

wherein:

the subset of pixels comprises pixels that are located to image a region of interest of the test chart;
the region of interest of the test chart contains a portion of a radial or tangential line;
the processor is configured to receive the pixel values of the subset of pixels and to calculate an oversampled edge function of the portion of the line based on the pixel values; and
the slope of the line relative to either a horizontal or vertical direction of the regular grid of pixels is S, and S has a threshold angular separation away from slopes of 1/1, -1/1, 1/0, and 0/1.

40. A system according to aspect 39 wherein the X radial lines extend from the central point at equally spaced apart angular intervals and the Y concentric polygons are regular polygons.

41. A system according to any one of aspects 39 and 40 wherein each of the patches is distinctly colored from every patch with which it shares a boundary.

42. A lens measuring system according to any one of aspects 39 to 41 wherein S has the threshold angular separation away from slopes of 2/1, -2/1, 1/2, -1/2, 3/1, -3/1, 1/3, -1/3, 3/2, -3/2, 2/3, and -2/3.

43. A lens measuring system according to any one of aspects 39 to 41 wherein S has the threshold angular separation away from slopes of M/N, where M/N represents any slope that satisfies the following properties:

both M and N are integers;
the fraction M/N is irreducible; and
both M and N are less than K and greater than -K;
for some integer value of K between two and ten, inclusive.

44. A lens measuring system according to any one of aspects 39 to 43 wherein the threshold angular separation is at least 1 degree.

45. A lens measuring system according to any one of aspects 39 to 43 wherein the threshold angular separation is at least 0.5 degrees.

46. A lens measuring system according to any one of aspects 39 to 43 wherein the threshold angular separation is at least 0.1 degrees.

47. A test chart comprising a plurality of first areas of a first color and a plurality of second areas of a second color, distinct from the first color, the first and second areas bounded by a plurality of radial first lines extending radially relative to a point and a plurality of polygonal second lines, each of the polygonal second lines intersecting each of the radial first lines, wherein:

the test chart is printed on a surface comprising a reference line; and
the first and second areas are arranged such that at each location where a first area is bounded by one of the first lines and a second area lies on the other side of the first line, the first line has a slope relative to the reference line that has a threshold angular separation away from slopes of 1/1, -1/1, 1/0, and 0/1.

48. A test chart according to aspect 47 wherein the first line has a slope relative to the reference line that has the threshold angular separation away from slopes of 2/1, - 2/1, 1/2, -1/2, 3/1, -3/1, 1/3, -1/3, 3/2, -3/2, 2/3, and -2/3.

49. A test chart according to aspect 47 wherein the first line has the threshold angular separation away from slopes of M/N, where M/N represents any slope that satisfies the following properties:

   both M and N are integers;
   the fraction M/N is irreducible; and
   both M and N are less than K and greater than -K;
   for some integer value of K between two and ten, inclusive.

50. A test chart according to any one of aspects 47 to 49 wherein the first and second areas are arranged such that at each location where a first area is bounded by one of the second lines and a second area lies on the other side of the second line, the second line has a slope relative to the reference line that has the threshold angular separation away from slopes of 1/1, -1/1, 1/0, and 0/1.

51. A test chart according to aspect 50 wherein the first line has a slope relative to the reference line that has the threshold angular separation away from slopes of 2/1, - 2/1, 1/2, -1/2, 3/1, -3/1, 1/3, -1/3, 3/2, -3/2, 2/3, and -2/3.

52. A test chart according to aspect 50 wherein the second line has the threshold angular separation away from slopes of M/N, where M/N represents any slope that satisfies the following properties:

   both M and N are integers;
   the fraction M/N is irreducible; and
   both M and N are less than K and greater than -K;
   for some integer value of K between two and ten, inclusive.

53. A test chart according to any one of aspects 47 to 52 wherein the threshold angular separation is at least 1 degree.

54. A test chart according to any one of aspects 47 to 52 wherein the threshold angular separation is at least 0.5 degrees.

55. A test chart according to any one of aspects 47 to 52 wherein the threshold angular separation is at least 0.1 degrees.

56. A test chart comprising a plurality of isosceles trapezoids, wherein:

   each of the plurality of trapezoids comprises a pair of parallel edges and a pair of non-parallel edges;
   the non-parallel edges of each of the plurality of trapezoids define lines which aim at a common point; and
   at least two of the trapezoids share an edge and are distinctly colored from each other.

57. A test chart according to aspect 56 wherein:

   the plurality of trapezoids includes a subset of at least three congruent trapezoids; and
   each trapezoid belonging to the subset shares two non-parallel edges with two other trapezoids belonging to the subset.

58. A test chart comprising a plurality of first areas of a first color and a plurality of second areas of a second color, distinct from the first color, the first and second areas bounded by a plurality of radial first lines extending radially relative to a point and a plurality of polygonal second lines, each of the polygonal second lines intersecting each of the radial first lines, wherein:

   the test chart is printed on a surface comprising a reference line; and
   the first and second areas are arranged such that at each location where a first area is bounded by one of the first lines and a second area lies on the other side of the first line, the first line has a slope relative to the reference line that has a threshold angular separation away from slopes of 1/1, -1/1, 1/0, and 0/1.

While a number of exemplary aspects and embodiments have been discussed above, those of skill in the art will recognize certain modifications, permutations, additions and sub-combinations thereof. It is therefore intended that the following appended claims and claims hereafter introduced are interpreted to include all such modifications, permutations, additions and sub-combinations as are within their true spirit and scope.

**Claims**

1. A test chart comprising:

   X radial lines extending from a central point; and
   Y concentric X-sided polygons centered at the central point;

   wherein:

   each of the X-sided polygons comprises X tangential lines;
   each of the X radial lines intersects one vertex of each of the polygons;
   each of the X radial lines is divided into Y segments by its intersection points with the central point and with the polygons;
   the radial lines and the polygons define boundaries of X*Y non-overlapping patches; and
   at least two patches share a boundary and are distinctly colored from each other.

2. A test chart according to claim 1 wherein the X radial lines extend from the central point at equally spaced apart angular intervals and the Y concentric polygons are regular polygons.

3. A test chart according to claim 1 or 2 wherein each of the patches is distinctly colored from every patch with which it shares a boundary.

4. A test chart according to claim 3 wherein X is even and the patches are colored to form a checkerboard pattern.

5. A test chart according to any one of claims 1 to 4 wherein X is in the range of four to twenty, and Y is in the range of two to ten.

6. A test chart according to any one of claims 1 to 5 wherein the test chart is printed on a surface comprising a reference line.

7. A test chart according to claim 6 wherein the radial lines have slopes relative to the reference line that are separated by at least a threshold angular separation from slopes of 1/1, -1/1, 1/0, and 0/1.

8. A test chart according to claim 6 wherein the tangential lines have slopes relative to the reference line that are separated by at least a threshold angular separation from slopes of 1/1, -1/1, 1/0, and 0/1.

9. A test chart according to claim 7 wherein the radial lines have slopes relative to the reference line that are separated by at least the threshold angular separation from slopes of 2/1, -2/1, 1/2, -1/2, 3/1, -3/1, 1/3, -1/3, 3/2, -3/2, 2/3, and -2/3.

10. A test chart according to claim 7 wherein the tangential lines have slopes relative to the reference line that are separated by at least the threshold angular separation from slopes of 2/1, -2/1, 1/2, -1/2, 3/1, -3/1, 1/3, -1/3, 3/2, -3/2, 2/3, and -2/3.

11. A test chart according to claim 7 wherein at least one of the radial or tangential lines have slopes relative to the reference line that are separated by at least a threshold angular separation from slopes of M/N where M/N represents any slope that satisfies the following properties:

    both M and N are integers;
    the fraction M/N is irreducible; and
    both M and N are less than K and greater than -K;

for some integer value of K between one and ten, inclusive.

12. A test chart according to claim 7 wherein the threshold angular separation is 1 degree, preferably 0.5 degrees.

13. A method for measuring a property of a lens, the method comprising:

providing a test chart comprising:

X radial lines extending from a central point; and
Y concentric X-sided polygons centered at the central point;

wherein:

each of the X-sided polygons comprises X tangential lines;
each of the X radial lines intersects one vertex of each of the polygons;
each of the X radial lines is divided into Y segments by its intersection points with the central point and with the polygons;
the radial lines and the polygons define boundaries of X*Y non-overlapping patches; and
at least two patches share a boundary and are distinctly colored from each other;
the slope of the radial or tangential lines, relative to either a horizontal or vertical direction of the regular grid of pixels of the focal plane array, has at least a threshold angular separation away from slopes of 1/1, -1/1, 1/0, and 0/1;
providing a focal plane array comprising a regular grid of pixels; and
imaging the test chart through the lens onto the focal plane array and obtaining a digital image of the test chart using the focal plane array.

14. A method according to claim 13 wherein the slope of at least one of the radial and tangential lines, relative to either the horizontal or vertical direction of the regular grid of pixels, has at least threshold angular separation away from slopes of M/N where M/N represents any slope that satisfies the following properties:

both M and N are integers;
the fraction M/N is irreducible; and
both M and N are less than K and greater than -K;
for some integer value of K between one and ten, inclusive.

15. A method according to claim 13 or 14 comprising:

identifying a region of interest on the test chart, the region of interest containing at least a portion of one of the radial and tangential lines;
determining pixel values in the image of the pixels which correspond to the region of interest; and
calculating a K-times oversampled edge function of the portion of the line using the pixel values.

16. A method according to claim 15 comprising calculating a modulation transfer function of a portion of a field of view of the lens corresponding to the region of interest using the oversampled edge function.

17. A lens measuring system comprising:

a test chart according to any one of claims 1 to 12:

a focal plane array comprising a regular grid of pixels;
a data store containing data identifying a subset of the pixels; and
a processor;

wherein:

the subset of pixels comprises pixels that are located to image a region of zinterest of the test chart;
the region of interest of the test chart contains a portion of a radial or tangential line;
the processor is configured to receive the pixel values of the subset of pixels and to calculate an oversampled edge function of the portion of the line based on the pixel values; and
the slope of the line relative to either a horizontal or vertical direction of the regular grid of pixels is S, and S has a threshold angular separation away from slopes of 1/1, -1/1, 1/0, and 0/1.

FIG. 1 – Prior Art

FIG. 2 – Prior Art

FIG. 3 – Prior Art

FIG. 4 – Prior Art

FIG. 5 – Prior Art

FIG. 6

FIG. 7A

70

71

| | 1 | 2 | 3 | 4 |
|---|---|---|---|---|
| A | $[P_{1A}]$ | $[P_{2A}]$ | $[P_{3A}]$ | $[P_{4A}]$ |
| B | $[P_{1B}]$ | $[P_{2B}]$ | $[P_{3B}]$ | $[P_{4B}]$ |
| C | $[P_{1C}]$ | $[P_{2C}]$ | $[P_{3C}]$ | $[P_{4C}]$ |
| D | $[P_{1D}]$ | $[P_{2D}]$ | $[P_{3D}]$ | $[P_{4D}]$ |
| E | $[P_{1E}]$ | $[P_{2E}]$ | $[P_{3E}]$ | $[P_{4E}]$ |
| F | $[P_{1F}]$ | $[P_{2F}]$ | $[P_{3F}]$ | $[P_{4F}]$ |

FIG. 7B

75

| | | | | | | | | | | | | | | | | |
|---|---|---|---|---|---|---|---|---|---|---|---|---|---|---|---|---|
| A | | | [P$_{1A}$] | | | | [P$_{2A}$] | | | | [P$_{3A}$] | | | | [P$_{4A}$] | |
| B | | | [P$_{1B}$] | | | | [P$_{2B}$] | | | | [P$_{3B}$] | | | | [P$_{4B}$] | |
| C | | | [P$_{1C}$] | | | | [P$_{2C}$] | | | | [P$_{3C}$] | | | | [P$_{4C}$] | |
| D | | | [P$_{1D}$] | | | | [P$_{2D}$] | | | | [P$_{3D}$] | | | | [P$_{4D}$] | |
| E | | | [P$_{1E}$] | | | | [P$_{2E}$] | | | | [P$_{3E}$] | | | | [P$_{4E}$] | |
| F | | | [P$_{1F}$] | | | | [P$_{2F}$] | | | | [P$_{3F}$] | | | | [P$_{4F}$] | |

1     2     3     4

FIG. 7C

| | | | | | | | | | | | | | | |
|---|---|---|---|---|---|---|---|---|---|---|---|---|---|---|
| A | | | $[P_{1A}]$ | | | $[P_{2A}]$ | | | $[P_{3A}]$ | | | $[P_{4A}]$ | | |
| B | | | $[P_{1B}]$ | | | $[P_{2B}]$ | | | $[P_{3B}]$ | | | $[P_{4B}]$ | | |
| C | | | $[P_{1C}]$ | | | $[P_{2C}]$ | | | $[P_{3C}]$ | | | $[P_{4C}]$ | | |
| D | | | $[P_{1D}]$ | | | $[P_{2D}]$ | | | $[P_{3D}]$ | | | $[P_{4D}]$ | | |
| E | | | $[P_{1E}]$ | | | $[P_{2E}]$ | | | $[P_{3E}]$ | | | $[P_{4E}]$ | | |
| F | | | $[P_{1F}]$ | | | $[P_{2F}]$ | | | $[P_{3F}]$ | | | $[P_{4F}]$ | | |

FIG. 7D

77

| | | $[P_{1A}]$ | $[P_{1B}]$ | | $[P_{1C}]$ | $\dfrac{[P_{2A}]+[P_{1D}]}{2}$ | $\dfrac{[P_{2B}]+[P_{1E}]}{2}$ | | $\dfrac{[P_{2C}]+[P_{1F}]}{2}$ | $\dfrac{[P_{3A}]+[P_{2D}]}{2}$ | $\dfrac{[P_{3B}]+[P_{2E}]}{2}$ | | $\dfrac{[P_{3C}]+[P_{2F}]}{2}$ | $\dfrac{[P_{4A}]+[P_{3D}]}{2}$ | $\dfrac{[P_{4B}]+[P_{3E}]}{2}$ | | $\dfrac{[P_{4C}]+[P_{3F}]}{2}$ | $[P_{4D}]$ | $[P_{4E}]$ | | $[P_{4F}]$ | |
|---|---|---|---|---|---|---|---|---|---|---|---|---|---|---|---|---|---|---|---|---|---|---|

FIG. 7E

FIG. 8

FIG. 9

100A

FIG. 10A

100B

101

102

FIG. 10B

110

FIG. 11

120

FIG. 12

FIG. 13

FIG. 14

FIG. 15

FIG. 16

170

171

173

172

172

172

173

173

172

173

FIG. 17

181 — OBTAIN IMAGE
OF TEST CHART

180

182 — SELECT
REGIONS OF
INTEREST

183 — PERFORM CALCULATION
BASED ON PIXEL VALUES

FIG. 18

Europäisches
Patentamt

European
Patent Office

Office européen
des brevets

# EUROPEAN SEARCH REPORT

Application Number

EP 14 18 9401

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/076981 A1 (OJANEN HARRI J [FI]) 5 April 2007 (2007-04-05) * the whole document * | 1-17 | INV. G01M11/02 |
| X | DE 20 2008 018042 U1 (ANZUPOWA VALENTINA [DE]; DOLOTOV INNA [DE]) 18 August 2011 (2011-08-18) * paragraph [0001] - paragraph [0006]; figures 3-7 * | 1-17 | |
| X | GB 2 482 022 A (ST MICROELECTRONICS RES & DEV [GB]) 18 January 2012 (2012-01-18) * the whole document * | 1-17 | |

TECHNICAL FIELDS
SEARCHED        (IPC)

G01M

The present search report has been drawn up for all claims

| Place of search | Date of completion of the search | Examiner |
|---|---|---|
| The Hague | 10 February 2015 | Amroun, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 18 9401

This annex lists the patent family members relating to the patent documents cited in  the above-mentioned European search report.
The members are as contained in the European Patent Office EDP file on
The European Patent Office is in no way liable for these particulars which are merely given for the purpose of information.

10-02-2015

| Patent document cited in search report | | Publication date | Patent family member(s) | | Publication date |
|---|---|---|---|---|---|
| US 2007076981 | A1 | 05-04-2007 | NONE | | |
| DE 202008018042 | U1 | 18-08-2011 | NONE | | |
| GB 2482022 | A | 18-01-2012 | GB | 2482022 A | 18-01-2012 |
| | | | US | 2012013760 A1 | 19-01-2012 |

EPO FORM P0459

For more details about this annex : see Official Journal of the European Patent Office, No. 12/82

**EP 2 863 201 A1**

**Patent documents cited in the description**

- US 61893142 B